Europäisches Patentamt

European Patent Office

Office européen des brevets

(11) Veröffentlichungsnummer: **0 259 570 B1**

(12) **EUROPÄISCHE PATENTSCHRIFT**

(45) Veröffentlichungstag der Patentschrift: **12.02.92**

(21) Anmeldenummer: **87110094.7**

(22) Anmeldetag: **13.07.87**

(51) Int. Cl.⁵: **B23B 29/034**

(54) **Radial verstellbares Werkzeug.**

(30) Priorität: **12.09.86 DE 3631156**

(43) Veröffentlichungstag der Anmeldung:
**16.03.88 Patentblatt 88/11**

(45) Bekanntmachung des Hinweises auf die
Patenterteilung:
**12.02.92 Patentblatt 92/07**

(84) Benannte Vertragsstaaten:
**CH DE ES FR GB IT LI SE**

(56) Entgegenhaltungen:
**EP-A- 0 043 920**
**EP-A- 0 054 838**
**EP-A- 0 055 423**
**DE-A- 3 418 215**
**GB-A- 2 040 742**

(73) Patentinhaber: **Friedrich Deckel Aktiengesellschaft**
**Plinganserstrasse 150**
**W-8000 München 70(DE)**

(72) Erfinder: **Strauss, Walter**
**Waakirchnerstrasse 19**
**W-8000 München 70(DE)**

Rank Xerox (UK) Business Services

**Beschreibung**

Die Erfindung betrifft eine Einrichtung der im Oberbegriff des Anspruches 1 genannten Art.

Eine radiale Verstellung der Werkzeugschneide hat grundsätzlich zwei unterschiedliche Anwendungsbereiche:

a) einen Ausgleich des Werkzeugverschleisses oder die Herstellung von Passungen bei Zylinderflächen, wobei die relativ kleinräumige radiale Verstellung der Schneide vorzugsweise dann erfolgt, wenn das Werkzeug außer Eingriff mit dem Werkstück ist;

b) eine radiale Verstellung zum Zwecke des Plandrehens, Kegeldrehens oder ähnlichen Bearbeitungsvorgängen, wobei die radiale Verstellung während des Eingriffes des Werkzeuges mit dem Werkstück erfolgt.

Es sind bereits Einrichtungen der im Oberbegriff des Anspruches 1 genannten Art bekannt, bei denen die Verstellung der Werkzeugschneide dadurch vorgenommen wird, daß der mit einer Skala versehene Verstellring bei stehender Arbeitsspindel um einen bestimmten Betrag verstellt wird. Um eine kontinuierliche Werkzeugverstellung während des Bearbeitungsvorganges zu erhalten, wird der Verstellring über ein gesondertes Gestänge mit einem festen Punkt des Spindelgehäuses verbunden, so daß er die Spindelumdrehung nicht mitmacht, wobei über das Übertragungsgetriebe der Querschlitten in Abhängigkeit von der Spindelumdrehung verstellt wird (z.B. Universal Plan- und Ausdrehköpfe der Fa. Wohlhaupter). Ein Nachteil der bisher bekannten Einrichtungen ist darin zu sehen, daß sie nicht in einen automatischen Bearbeitungsablauf integrierbar sind, da die Verstellung bzw. die Kupplung des Verstellringes mit dem Spindelgehäuse jeweils von Hand erfolgen muß.

Es ist auch bereits eine Einrichtung der im Oberbegriff des Anspruches 1 genannten Art bekannt, bei welcher der Verstellring durch eine gesonderte, an der Maschine ausgebildete Arretiereinrichtung festgehalten werden kann, so daß auch eine automatische Verstellung möglich ist (EP-A-0 155 241). Die Arretiereinrichtung ist radial außerhalb des Werkzeugteils angeordnet, an welchem der Verstellring angeordnet ist. Diese Arretiereinrichtung vergrößert damit den gesamten, von der Werkzeuganordnung eingenommenen Raum erheblich und muß beispielsweise auch in eine Betrachtung über die mögliche Kollision zwischen dem Werkzeug und dem Werkstück einbezogen werden. Ein weiterer Nachteil wird darin gesehen, daß bei der bekannten Werkzeuganordnung in dem Fall, daß die Arretiereinrichtung außer Eingriff mit dem Verstellring ist, keine Sicherung gegen ein unbeabsichtigtes Verstellen des Verstellringes mehr wirksam ist. Wenn beispielsweise der mit dem gesamten Werkzeug umlaufende Verstellring zufällig beispielsweise mit dem Werkstück in Berührung kommen sollte, besteht die Gefahr, daß dadurch die Schneide radial verstellt wird.

Es ist die Aufgabe der vorliegenden Erfindung, eine Einrichtung der im Oberbegriff des Anspruches 1 genannten Art zu schaffen, welche eine automatische Radialverstellung der Werkzeugschneide sowohl zum Zwecke einer Verschleißkompensation als auch zum Zwecke des Plandrehens, Kegeldrehens oder vergleichbarer Bearbeitungsvorgänge erlaubt, welche eine wirksame Sicherung gegen eine unbeabsichtigte Radialverstellung der Werkzeugschneide aufweist, und welche einen einfachen Aufbau hat.

Diese Aufgabe ist erfindungsgemäß durch die im Kennzeichen des neuen Anspruches 1 enthaltenen Merkmale gelöst. Die Arretiereinrichtung ist im Gegensatz zu der in EP-A-0 155 241 beschriebenen Konstruktion nicht feststehend radial außerhalb des Werkzeuges angeordnet, sondern als aus dem Spindelgehäuse ausfahrbarer Arretierstößel ausgebildet. Dieser kann während der Zeit, während der eine Radialverstellung nicht gefordert ist, vollständig eingefahren werden, so daß er insofern kein Kollisionshindernis beispielsweise für das Werkstück bilden kann. In seiner ausgefahrenen Stellung gelangt der Arretierstößel in Arretiereingriff mit dem Verstellring, so daß die Drehbewegung der Spindel dann ausgenutzt werden kann, um die radiale Verstellung der Werkzeugschneide durchzuführen. Der Arretierstößel hat gleichzeitig die Aufgabe, ein Verriegelungsglied zu betätigen, welches in einer Verriegelungsstellung den Verstellring gegen Verdrehung sichert, in einer Entriegelungsstellung den Verstellring jedoch freigibt.

Durch die EP-A1-0 043 920 ist bereits eine Einrichtung bekannt, bei welcher ebenfalls ein parallel zur Spindelachse aus dem Spindelgehäuse ausfahrbarer Stößel vorgesehen ist, welcher in eine am Verstellring ausgebildete Halteklaue eingreifen und diesen gegenüber dem Spindelgehäuse fixieren kann, so daß bei Drehung der Spindel eine Radialverstellung einer Werkzeugschneide erfolgt. Diese Einrichtung besitzt außerdem eine Kugelrasteinrichtung zum Verrasten des Verstellringes in bestimmten Drehlagen. Diese kann jedoch nur eine verhältnismäßig geringe Haltekraft haben, da sie bei der gewollten Radialverstellung des Werkzeuges überwunden werden muß; sie kann deshalb keinen sicheren Schutz gegen eine unbeabsichtigte Verstellung bieten. Ein weiterer Nachteil wid darin gesehen, daß bei der gewollten Radialverstellung durch die Rasteinrichtung störende Geräusche erzeugt werden, vor allem, wenn ein größerer, mehrere Raststellungen umfassender Verstellbereich durchlaufen wird. Schließlich ist bei der bekannten Einrichtung nur eine Verstellung in diskreten, der Rastteilung entsprechenden Schritten möglich, so daß eine kontinuierliche Feinverstellung der Schneide konstruktiv ausgeschlossen ist.

In weiterer Ausgestaltung der Erfindung ist vorgesehen, daß der Arretierstößel parallel zur Spindelachsenrichtung ausfahrbar ist. Er kann damit weitgehend innerhalb der Umfangskontur des Werkzeuges angeordnet sein, so daß diese Maßnahme dazu beiträgt, daß die Arretiereinrichtung auch im ausgefahrenen Zustand keine Kollisionsprobleme aufwirft.

Das Verriegelungsglied ist in weiterer Ausgestaltung der Erfindung als parallel zur Spindelachsenrichtung verschiebbar und drehfest in eine Ausnehmung des Verstellringes gelagerter Bolzen ausgebildet, welcher in seiner Verriegelungsstellung mittels einer an seinem Umfang ausgebildeten Verzahnung in eine mit dem Werkzeugaufnahmegehäuse verbundene Verzahnung eingreift. Je nach der gewählten Feinheit der Verzahnung ist eine mehr oder weniger fein abgestufte radiale Verstellung und Fixierung der Schneide möglich, wie weiter hinten ausführlicher beschrieben wird. Andere Möglichkeiten des Verriegelungseingriffes zwischen Verriegelungsglied und Werkzeugaufnahmegehäuse sind z.B. Hirtverzahnung, Lochscheibe und Riegelbolzen bzw. mechanische, hydraulische oder andere Kupplungen.

In einem Ausführungsbeispiel der Erfindung ist vorgesehen, daß das Übertragungsgetriebe ein an der Innenseite des Verstellringes ausgebildetes, koaxial zur Spindelachsenrichtung angeordnetes Verstellgewinde umfaßt, welches mit einem an einem axial verschiebbar im Werkzeugaufnahmegehäuse gelagerten Verstellkolben ausgebildeten Gegengewinde zusammenwirkt derart, daß bei Verdrehung des Verstellringes relativ zum Gehäuse der Verstellkolben verschoben wird, und daß an dem dem Schlitten zugewandten Ende des Verstellkolbens ein zur Spindelachsenrichtung geneigter Fortsatz angeordnet ist, welcher formschlüssig in eine am Schlitten ausgebildete Ausnehmung eingreift. Eine axiale Verschiebung des geneigten Fortsatzes mit dem Verstellkolben hat damit eine zwangsweise radiale Verschiebung des Schlittens zur Folge. Diese Konstruktion ist vorzugsweise für ein Werkzeug vorgesehen, bei welchem eine Radialverstellung nur zum Zwecke einer Verschleißkompensation durchgeführt wird, wobei relativ geringe radiale Verstellwege erforderlich sind.

Bei einem anderen Ausführungsbeispiel der Erfindung umfaßt das Übertragungsgetriebe ein mit dem Verstellring antriebsverbundenes Zahnrad, welches mit einer mit dem Schlitten verbundenen Zahnstange zusammenwirkt. Diese Konstruktion ist für größere radiale Verstellwege geeignet, wie sie beispielsweise beim Plandrehen, Kegeldrehen usw. benötigt werden.

Der Arretierstößel ist in weiterer Ausgestaltung der Erfindung mit einem Verschiebeantrieb verbunden, der seinerseits von einer Maschinensteuerung ansteuerbar und automatisch betätigbar ist.

In weiterer Ausgestaltung der Erfindung ist vorgesehen, daß ein Zählwerk zum Zählen der bei ausgefahrenem Arretierstößel durchgeführten Spindelumdrehungen bzw. -drehwinkel und ein Rechenwerk zum Umrechnen der durchgeführten Spindelumdrehungen in den entsprechenden radialen Verstellweg der Schneide vorgesehen sind. Zählwerk und Rechenwerk können vorzugsweise in der allgemeinen Maschinensteuerung integriert sein.

Mehrere Ausführungsbeispiele der Erfindung sind in der Zeichnung dargestellt und im folgenden näher beschrieben. Es zeigen:

Fig. 1 einen Längsschnitt durch eine Einrichtung zur Verstellung der Schneide zum Zwecke einer Verschleißkompensation;

Fig. 2 einen Teillängsschnitt in Richtung der Linie II-II in Fig. 1;

Fig. 3 einen Teilquerschnitt entsprechend der Linie III-III in Fig. 1;

Fig. 4 einen Teilquerschnitt entsprechend der Linie IV-IV in Fig. 1;

Fig. 5 einen Längsschnitt etwa entsprechend Fig. 1, jedoch von einem anderen Ausführungsbeispiel;

Fig. 6 einen Teilquerschnitt entsprechend der Linie VI-VI in Fig. 5.

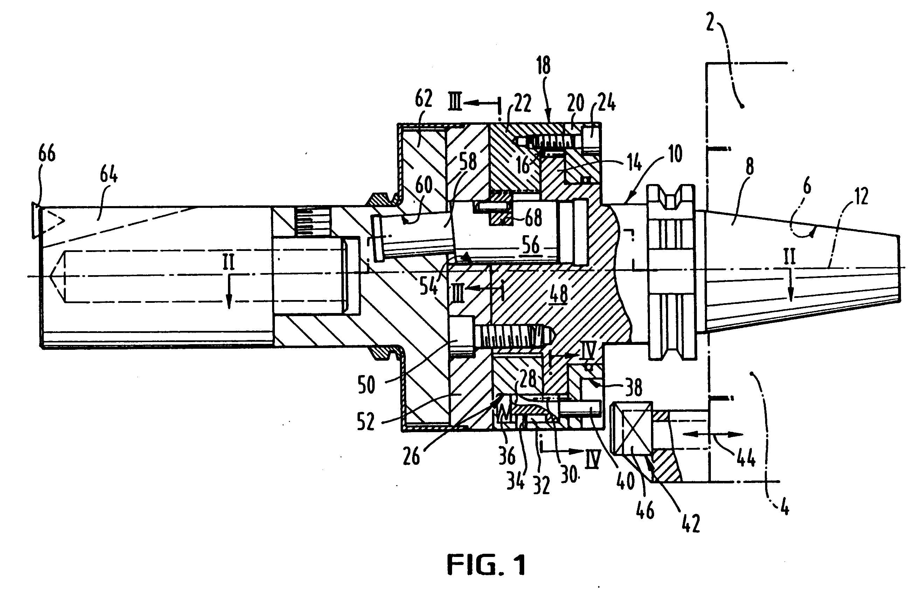

Die in Fig. 1 dargestellte Einrichtung umfaßt eine in einem Spindelgehäuse 2 drehbar gelagerte, schematisch dargestellte Spindel 4 mit einer kegelförmigen Werkzeugaufnahme 6. In der Werkzeugaufnahme 6 ist der Werkzeugkegel 8 eines Werkzeugaufnahmegehäuses 10 aufgenommen und in einer nicht näher dargestellten, bekannten Weise fest gespannt.

Das Werkzeugaufnahmegehäuse 10 ist im wesentlichen rotationssymmetrisch zur Spindelachse 12 ausgebildet und trägt in seinem der Spindel 4 abgewandten Bereich einen Flansch 14, welcher an seinem Umfang eine Stirnradverzahnung 16 aufweist. Auf dem Flansch 14 ist ein zur Spindelachse 12 koaxialer Verstellring 18 drehbar gelagert. Dieser Verstellring 18 setzt sich aus einem hinteren Verstellringteil 20 und einem vorderen Verstellringteil 22 zusammen, die durch Schrauben 24 zusammengeschraubt sind.

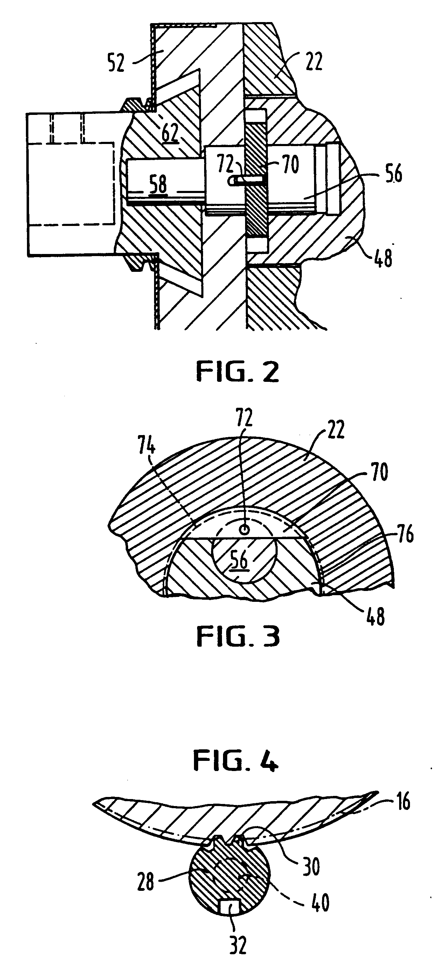

In einer Ausnehmung 26 des Verstellringes 18 ist ein bolzenförmiges Verriegelungsglied 28 aufgenommen, welches parallel zur Richtung der Spindelachse 12 verschiebbar ist. Wie insbesondere auch aus Fig 4 hervorgeht, ist das Verriegelungsglied 28 in seinem der Spindelachse 12 zugekehrten Bereich mit einer Verzahnung 30 versehen, welche in die Stirnradverzahnung 16 des Flansches 14 eingreift. Auf dem der Verzahnung 30 abgewandten Bereich weist das Verriegelungsglied 28 eine Keilnut 32 auf, in die ein im Verstellring 18 befestigter Keil 34 eingreift, welcher eine Drehung des Verriegelungsgliedes 28 um seine eigene Längsachse verhindert. Das Verriegelungsglied 28 kann in axialer Richtung zwischen einer Verriegelungsstellung, bei der die Verzahnung 30 in die Stirnradverzahnung 16 eingreift, und einer Entriegelungsstellung, bei welcher die Verzahnung 30 außer Eingriff mit der Stirnradverzahnung 16 ist, verschoben werden. Eine Druckfeder 36, die zwischen dem in Fig. 1 linken Ende des Verriegelungsgliedes 28 einerseits und dem Boden der Ausnehmung 26 andererseits eingespannt ist, drückt das Verriegelungsglied 28 in dessen Verriegelungsstellung. Der hintere Verstellringteil 20 weist in dem Bereich, in welchem das Verriegelungsglied 28 angeordnet ist, eine Ausnehmung 38 auf, in diese Ausnehmung 38 ragt ein Fortsatz 40 des Verriegelungsgliedes 28 hinein.

Im Spindelgehäuse 2 ist parallel zur Spindelachse 12 ein Arretierstößel 42 in Richtung des Pfeiles 44 aus- bzw. einfahrbar gelagert. Der Kopf 46 des Arretierstößels 42 ist so ausgebildet, daß er formschlüssig in die Aufnahme 38 hineinpaßt.

Das Werkzeugaufnahmegehäuse umfaßt im wesentlichen den Zentralteil 48, welcher mittels Schrauben 50 mit einer Abschlußplatte 52 verschraubt ist. Im Zentralteil 48 und der Abschlußplatte 52 ist exzentrisch zur Spindelachse 12 eine zylindrische Ausnehmung 54 ausgebildet, in der ein entsprechend geformter zylindrischer Verstellkolben 56 axial verschiebbar gelagert ist. An seinem in Fig. 1 linken Ende trägt der Verstellkolben 56 einen zur Spindelachse 12 geneigten zylindrischen Fortsatz 58. Dieser Fortsatz greift in eine entsprechend geformte Ausnehmung 60 ein, welcher in einem quer zur Richtung der Spindelachse 12 in der Abschlußplatte 52 verschiebbar gelagerten Schlitten 62 ausgebildet ist. Die Lagerung des Schlittens 62 in der Abschlußplatte 52 ist insbesondere aus Fig. 2 zu erkennen. Der Schlitten 62 trägt in bekannter und deshalb nicht näher beschriebener Weise eine Bohrstange 64 mit einer Schneide 66, die sich mit dem Schlitten 62 quer zur Spindelachse 12 verschieben läßt.

In eine radiale Ausnehmung 68 des Verstellkolbens 56 ist ein kreissegmentförmiges Führungsstück 70 eingesetzt, vorzugsweise eingeklebt. Ein einerseits in das Führungsstück 70, andererseits in den Verstellkolben 56 eingreifender Stift 72 gewährleistet eine Sicherung des Führungsstückes 70 in der Ausnehmung 68. Das Führungsstück 70 trägt an seinem bogenförmigen Außenrand ein Gegengewinde 74, welches mit einem inneren Verstellgewinde 76 am Innenumfang des vorderen Verstellringteils 22 zusammenwirkt. Bei einer relativen Verdrehung des Verstellringes 18 gegenüber dem Zentralteil 48 wird das Führungsstück 70 und damit der Verstellkolben 56 in axialer Richtung verschoben. Dabei greift der Fortsatz 58 mehr oder weniger weit in die Ausnehmung 60 des Schlittens 62 ein und verschiebt diesen quer zur Spindelachse 12.

Die Funktionsweise der beschriebenen Einrichtung ist folgende: Wenn ein Verschleiß der Schneide 66 gemessen wurde, wird dieser Verschleiß an eine zentrale Maschinensteuerung übermittelt. Bei stehender und winkelmäßig ausgerichteter Spindel 4 wird der Arretierstößel 42 nach links ausgefahren, so daß sein Kopf 46 formschlüssig in die Ausnehmung 38 des Verstellringes 18 eingreift. Gleichzeitig wird das Verriegelungsglied 28 gegen die Kraft der Feder 36 nach links verschoben, bis die Verzahnung 30 außer Eingriff mit der Stirnradverzahnung 16 des Flansches 14 gelangt. Sodann wird die Spindel 4 verdreht, wobei infolge des Zusammenwirkens der Schneckengewinde 74, 76 der Verstellkolben 56 axial verschoben und dadurch der Schlitten 62 radial verschoben wird. Die Steuerung ist mit einer Zähleinrichtung zum Zählen der Spindelumdrehungen und zum Umrechnen derselben in den radialen Versatz des Schlittens 62 versehen.

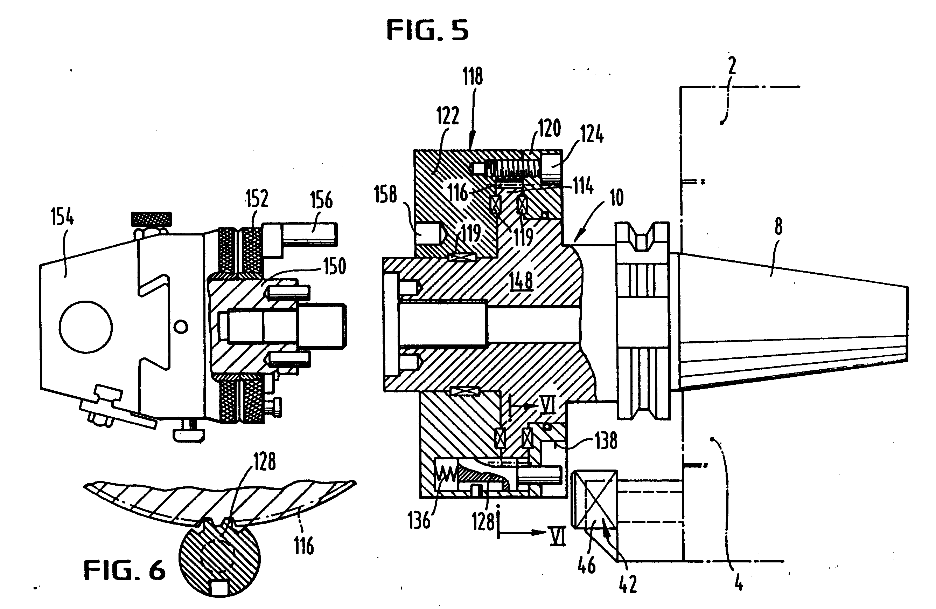

Fig. 5 zeigt ein anderes Ausführungsbeispiel der Erfindung, wobei jeweils mit Teilen der Figuren 1 bis 4 übereinstimmende Teile mit gleichen Bezugszeichen versehen sind.

Das Werkzeugaufnahmegehäuse 10 umfaßt wiederum einen Zentralteil 148 mit einem Flansch 114, an dessen Außenumfang eine Stirnradverzahnung 116 ausgebildet ist. Auf dem Zentralteil 148 ist ein Verstellring 118 über Lager 119 drehbar gelagert. Der Verstellring 118 besteht wiederum aus einem hinteren Verstellringteil 120 und einem vorderen Verstellringteil 122, die über Schrauben 124 miteinander verschraubt sind. Der Verstellring 118 ist in gleicher Weise, wie in Fig. 1 beschrieben, mit einem Verriegelungsglied 128 versehen, welches durch einen aus dem Spindelgehäuse 2 ausfahrbaren Arretierstößel 42, dessen Kopf 46 in eine Ausnehmung 138 des hinteren Verstellringteils 120 formschlüssig eingreift, betätigt werden kann. Auf diese Weise kann der Verstellring 118 wiederum gegen Drehung arretiert werden, während sich die Spindel 4 und damit der Zentralteil 148 drehen.

An der vorderen Stirnseite des Zentralteils 148 ist ein herkömmlicher Universal Plan- und Ausdrehkopf befestigt, dessen eigentliches Gehäuse 150 drehfest mit dem Zentralteil 148 verbunden ist. Ein auf dem Gehäuse 150 drehbar gelagerter Verstellring 152, welcher über ein nicht näher beschriebenes Getriebe eine radiale Verstellung des Schlittens 154 bewirkt, ist über ein Kupplungsstück 156, welches in eine entsprechende Ausnehmung 158 am vorderen Verstellringteil 122 eingreift, mit diesem drehfest gekoppelt.

Die Funktion dieser Einrichtung ist folgende: Wenn der Schlitten 154 zum Zwecke einer Plandreh- oder Kegelbearbeitung in Abhängigkeit von der Verdrehung der Spindel 4 radial verstellt werden soll, wird bei stehender und ausgerichteter Spindel 4 der Arretierstößel 42 in Fig. 5 nach links ausgefahren, so daß sein Kopf 46 in die Ausnehmung 138 des Verstellringes 118 eingreift und dabei in der bereits beschriebenen Weise das Verriegelungsglied 128 nach links in dessen Entriegelungsstellung verschiebt. Wenn sich die Spindel 2 dreht, werden der Verstellring 118 und über die Ausnehmung 158 sowie das Kupplungsstück 156 auch der Verstellring 152 festgehalten. Das Zentralteil 148 nimmt das mit diesem drehfest verbundene Gehäuse 150 mit, so daß über das nicht näher beschriebene, innerhalb des Gehäuses 150 angeordnete Getriebe der Schlitten 154 radial verstellt wird.

Der Verstellweg wird dadurch festgelegt, daß die Spindelumdrehungen durch ein Zähleinrichtung gezählt und durch einen Rechner in einen dementsprechenden radialen Verstellweg des Schlittens 154 umgerechnet wird. Auch diese Einrichtung erlaubt eine Integrierung in eine vollautomatische Maschinensteuerung.

## Patentansprüche

1. Einrichtung zur radialen Verstellung der Schneide (66) eines Bohr- und Drehwerkzeuges (64), umfassend ein in die Spindel (4) einer Werkzeugmaschine einsetzbares Werkzeugaufnahmegehäuse (10), einen an diesem quer zur Spindelachsenrichtung verschiebbar gelagerten, die Schneide (66) tragenden Querschlitten (62), einen an der Außenseite des Gehäuses (10) koaxial zur Spindelachsenrichtung drehabar gelagerten Verstellring (18), welcher über ein im Gehäuse (10) angeordnetes Übertragungsgetriebe mit dem Querschlitten (62) gekoppelt ist, sowie eine Arretiereinrichtung zum Arretieren des Verstellringes (18) gegenüber dem mit der Spindel umlaufenden Gehäuse (10), wobei die Arretiereinrichtung einen aus dem die Spindel (2) aufnehmenden Spindelgehäuse (4) ausfahrbaren Arretierstößel (42) umfaßt, welcher in seiner ausgefahrenen Stellung in Arretiereingriff mit dem Verstellring (18, 118) kommt, dadurch **gekennzeichnet,** daß am Verstellring (18, 118) ein zwischen einer den Verstellring (18, 118) mit dem Gehäuse (4) verriegelnden Verriegelungsstellung und einer den Verstellring (18, 118) freigebenden Entriegelungsstellung verstellbares Verriegelungsglied (28, 128) angeordnet ist, welches durch den Arretierstößel (42) betätigbar ist, wobei das Verriegelungsglied (28, 128) beim Ausfahren des Arretierstößels (42) gegen die Kraft von Rückstellmitteln (36, 136) in seine Entriegelungsstellung verstellt wird.

2. Einrichtung nach Anspruch 1, dadurch **gekennzeichnet,** daß der Verstellring (18, 118) eine für eine formschlüssige Aufnahme des Arretierstößels (42) bestimmte Ausnehmung (38, 138) aufweist.

3. Einrichtung nach einem der Ansprüche 1 und 2, dadurch **gekennzeichnet,** daß der Arretierstößel (42) parallel zur Richtung der Spindelachse (12) ausfahrbar ist.

4. Einrichtung nach einem der Ansprüche 1 bis 3, dadurch **gekennzeichnet,** daß das Verriegelungsglied (28, 128) als parallel zur Richtung der Spindelachse (12) verschiebbar und drehfest in einer Ausnehmung des Verstellringes (18, 118) gelagerter Bolzen ausgebildet ist, welcher in seiner Verriegelungsstellung mittels einer an seinem Umfang ausgebildeten Verzahnung (30) in eine mit dem Werkzeugaufnahmegehäuse verbundene Verzahnung (16) eingreift.

5. Einrichtung nach einem der Ansprüche 1 bis 4, dadurch **gekennzeichnet,** daß das Übertragungsgetriebe ein an der Innenseite des Verstellringes (18) ausgebildetes, koaxial zur Spindelachsenrichtung angeordnetes Verstellgewinde (76) umfaßt, welches mit einem an einem axial verschiebbar im Werkzeugaufnahmegehäuse gelagerten Verstellkolben (56) ausgebildeten Gegengewinde (74) zusammenwirkt derart, daß bei Verdrehung des Verstellringes (18) relativ zum Gehäuse der Verstellkolben (56) verschoben wird, und daß an dem dem Schlitten (62) zugewandten Ende des Verstellkolbens (56) ein zur Spindelachsenrichtung geneigter Fortsatz (58) angeordnet ist, welcher formschlüssig in eine am Schlitten (62) ausgebildete Ausnehmung (60) eingreift.

6. Einrichtung nach Anspruch 5, dadurch **gekennzeichnet,** daß der Neigungswinkel zwischen der Richtung der Spindelachse (12) und der Ausrichtung des Fortsatzes (60) zwischen 2° und 6°, vorzugsweise etwa 4°, beträgt.

7. Einrichtung nach einem der Ansprüche 1 bis 4, dadurch **gekennzeichnet,** daß das Übertragungsgetriebe ein mit dem Verstellring antriebsverbundenes Zahnrad umfaßt, welches mit einer mit dem Schlitten verbundenen Zahnstange zusammenwirkt.

8. Einrichtung nach einem der Ansprüche 1 bis 7, dadurch **gekennzeichnet**, daß der Arretierstößel (42) mit einem Verschiebeantrieb verbunden ist.

9. Einrichtung nach Anspruch 8, dadurch **gekennzeichnet**, daß der Verschiebeantrieb des Arretierstößels (42) mit einer Maschinensteuerung verbunden und automatisch betätigbar ist.

10. Einrichtung nach einem der Ansprüche 1 bis 9, dadurch **gekennzeichnet**, daß ein Zählwerk zum Zählen der bei ausgefahrenem Arretierstößel durchgeführten Spindelumdrehungen und ein Rechenwerk zum Umrechnen der durchgeführten Spindelumdrehungen in den entsprechenden radialen Verstellweg der Schneide (66) vorgesehen sind.

**Claims**

1. In a device for effecting a radial adjusting of a cutting edge member (66) of a boring and turning tool, (64), said device including a tool-carrier housing (10) insertable into a spindle (4) of a machine tool, a cross slide (62) carrying said cutting edge member (66) and being supported for movement transversely with respect to the direction of a spindle axis on said housing, an adjusting ring (18) supported rotatably coaxially with respect to the direction of a spindle axis on the outside of said housing (10) which adjusting ring is coupled with said cross slide through a transmission gear arranged in said housing (10), and a locking device for locking said adjusting ring (18) relative to said housing (10) which rotates with said spindle, wherein said locking device includes a locking ram (42) extendable from said spindle housing receiving said spindle, which locking ram, in its extended position lockingly engages said adjusting ring, (18, 118), **characterized** in that a locking member (28, 128), which can be adjusted between a locking position locking said adjusting ring (18, 118) to said housing (4) and an unlocking position releasing said adjusting ring (18, 118), is arranged on said adjusting ring (18, 118), which locking member is operated by said locking ram (42) whereas said locking member (28, 128), during and extending of said locking ram (42) is adjusted against the force of a restoring means (36, 136) into its unlocking position.

2. The device according to claim 1, **characterized** in that said adjusting ring (18, 118) has a recess (38, 138) designated for a snugly receiving said locking ram (42) therein.

3. The device according to claim 1, **characterized** in that said locking ram (42) is extendible parallel with respect to the direction of said spindle axis (12).

4. The device according to claim 1, **characterized** in that said locking member (28, 128) is constructed as a bolt supported for movement parallel with respect to the direction of said spindle axis (12) and supported fixedly against rotation in a recess of said adjusting ring (18, 118), which bolt in its locking position engages by means of a tooth system (30) constructed on its periphery a tooth system (16) connected to said tool-carrier housing.

5. The device according to claim 1, **characterized** in that said transmission gear includes an adjusting thread (76) constructed on the inside of said adjusting ring (18) and arranged coaxially with respect to the direction of said spindle axis, which adjusting thread cooperates with a counterthread (74) constructed on an adjusting piston (56) supported for axial movement in said tool-carrier housing, wherein during rotation of said adjusting ring (18) relative to said housing, said adjusting piston (56) is moved, and wherein an extension (58) inclined with respect to the direction of said spindle axis is arranged at an end of said adjusting piston facing said carriage (62), which extension is snugly received in a recess (60) constructed in said carriage (62).

6. The device according to claim 5**, characterized** in that the angle of inclination between the direction of said spindle axis (12) and the alignment of said extension (60) is between 2 degrees and 6 degrees, preferably approximately 4 degrees.

7. The device according to claim 1, **characterized** in that said transmission gear includes a gear drivingly connected to said adjusting ring, which gear cooperates with a rack connected to said carriage.

8. The device according to claim 1, wherein said lokking ram (42) is connected to a slide drive.

9. The device according to claim 8, wherein said slide drive of said locking ram (42) is connected to a machine control and can be operated automatically.

**10.** The device according to claim 1, wherein a counter is provided for counting of the spindle rotations carried out with the locking ram extended and a computer for converting the carried-out spindle rotations into the corresponding radial path of adjustment of said cutting edge member (66).

## Revendications

**1.** Dispositif pour régler radialement le tranchant (66) d'un outil d'alésage et de tournage (64), comprenant un boîtier de raccordement d'outil (10) pouvant être inséré dans la broche (4) d'une machine-outil, un chariot transversal (62) portant le tranchant (66) et monté sur le boîtier (10) en coulissement perpendiculairement à la direction de l'axe de la broche, une bague de réglage (18) qui est montée sur le côté extérieur du boîtier (10) en rotation coaxialement à la direction de l'axe de la broche et qui est accouplée au chariot transversal (62) par un mécanisme de transmission disposé dans le boîtier (10), ainsi qu'un dispositif d'arrêt pour arrêter la bague de réglage (18) par rapport au boîtier (10) tournant avec la broche, le dispositif d'arrêt comprenant un coulisseau d'arrêt (42) qui peut être sorti du carter de broche (4) recevant la broche (2) et qui, dans sa position sortie, vient en engagement d'arrêt avec la bague de réglage (18,118),
caractérisé en ce qu'un organe de verrouillage (28,128) est disposé sur la bague de réglage (18,118), organe qui peut être actionné par le coulisseau d'arrêt (42) et qui peut être déplacé entre une position de verrouillage verrouillant la bague de réglage (18,118) avec le carter (4) et une position de déverrouillage libérant la bague de réglage (18,118), l'organe de verrouillage (28,128) étant, lors de la sortie du coulisseau d'arrêt (42), déplacé dans sa position de déverrouillage à l'encontre de la force de moyens de rappel (36,136).

**2.** Dispositif selon la revendication 1, caractérisé en ce que la bague de réglage (18,118) présente un évidement (38,138) destiné à recevoir en engagement positif le coulisseau d'arrêt (42).

**3.** Dispositif selon la revendication 1 ou 2, caractérisé en ce que le coulisseau d'arrêt (42) peut être sorti parallèlement à la direction de l'axe (12) de la broche.

**4.** Dispositif selon l'une des revendications 1 à 3, caractérisé en ce que l'organe de verrouillage (28,128) est réalisé sous la forme d'un goujon qui est monté en solidarité de rotation et en coulissement parallèlement à la direction de l'axe de broche (12) dans un évidement de la bague de réglage (18,118) et qui, dans sa position de verrouillage, s'engage par une denture (30) configurée sur sa périphérie dans une denture (16) disposée sur le boîtier de raccordement d'outil.

**5.** Dispositif selon l'une des revendications 1 à 4, caractérisé en ce que le mécanisme de transmission comprend un filetage de réglage (76), configuré sur le côté intérieur de la bague de réglage (18) et disposé coaxialement à la direction de l'axe de la broche, qui coopère avec un filetage complémentaire (74), configuré sur un piston de réglage (56) monté en coulissement axial dans le boîtier de raccordement d'outil, de telle sorte que le piston de réglage (56) est déplacé en coulissement lors de la rotation de la bague de réglage (18) par rapport au boîtier, et en ce qu'un prolongement (58), incliné vers la direction de l'axe de la broche, est disposé à l'extrémité du piston de réglage (56) qui est tournée vers le chariot (62), prolongement qui s'engage en liaison positive dans un évidement (60) configuré sur le chariot (62).

**6.** Dispositif selon la revendication 5, caractérisé en ce que l'angle d'inclinaison entre la direction de l'axe (12) de la broche et l'orientation du prolongement (58) est compris entre 2° et 6°, et de préférence égal à environ 4°.

**7.** Dispositif selon l'une des revendications 1 à 4, caractérisé en ce que le mécanisme de transmission comprend une roue dentée, qui est reliée en entraînement à la bague de réglage et coopère avec une crémaillère reliée au chariot.

**8.** Dispositif selon l'une des revendications 1 à 7, caractérisé en ce que le coulisseau d'arrêt (42) est relié à un entraînement en coulissement.

**9.** Dispositif selon la revendication 8, caractérisé en ce que l'entraînement en coulissement du coulisseau d'arrêt (42) est relié à une unité de commande de la machine et peut être actionné de manière automatique.

**10.** Dispositif selon l'une des revendications 1 à 9, caractérisé en ce qu'un compteur est prévu pour compter les révolutions accomplies par la broche lorsque le coulisseau d'arrêt est sorti, et une unité de calcul est prévue pour convertir les révolutions accomplies par la broche en course de réglage radial correspondante du tranchant (66).

FIG. 1

FIG. 2

FIG. 3

FIG. 4

FIG. 5

FIG. 6